(19) Europäisches Patentamt
European Patent Office
Office européen des brevets

(11) **EP 3 961 837 A1**

(12) # EUROPÄISCHE PATENTANMELDUNG

(43) Veröffentlichungstag:
**02.03.2022 Patentblatt 2022/09**

(21) Anmeldenummer: **20193637.4**

(22) Anmeldetag: **31.08.2020**

(51) Internationale Patentklassifikation (IPC):
***H02H 6/00** (2006.01)* ***H02H 7/085** (2006.01)*
***H02P 29/64** (2016.01)* ***G01K 7/42** (2006.01)*

(52) Gemeinsame Patentklassifikation (CPC):
**H02H 7/085; G01K 7/42; H02H 6/00; H02P 29/64**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
- **Jajtic, Zeljko**
  **80992 München (DE)**
- **Sachsenhauser, Peter**
  **84072 Au (DE)**
- **Böhling, Jürgen**
  **85221 Dachau (DE)**
- **Taubald, Tobias**
  **81543 München (DE)**
- **Volmert, Christian**
  **81667 München (DE)**

(54) **VERFAHREN ZUR ÜBERWACHUNG EINER WICKLUNGSTEMPERATUR**

(57) Die Erfindung betrifft ein Verfahren zur Überwachung einer Wicklungstemperatur einer Wicklung einer elektrischen Maschine (2), wobei die elektrische Maschine (2) von einem Umrichter (1) gespeist wird, wobei eine in die Wicklung eingeprägte Heizleistung ermittelt wird, wobei die Heizleistung mittels eines thermischen Modells (104) ausgewertet wird, wobei bei Überschreiten eines mit der Heizleistung verknüpften kritischen Wicklungstemperaturwerts ein Warnsignal und/oder ein Abschaltsignal erzeugt wird.

FIG 1

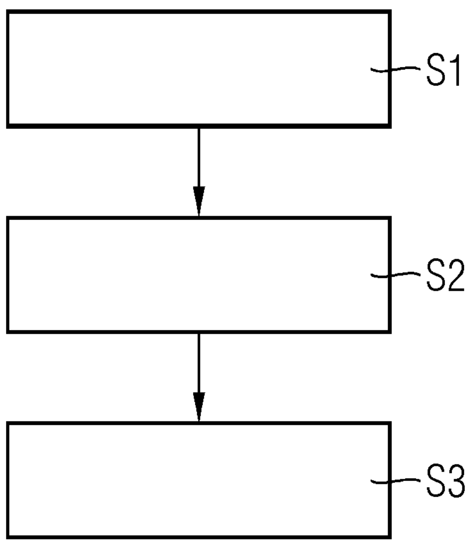


EP 3 961 837 A1

## Beschreibung

Die Erfindung betrifft ein Verfahren zur Überwachung einer Wicklungstemperatur einer Wicklung einer elektrischen Maschine.

Für hochdynamische Beschleunigungen werden dynamoelektrische Maschinen benötigt, deren thermischer Schutz, insbesondere thermischer Motorschutz, für einen Temperaturanstieg von mindestens 20 K/s bis 30 K/s geeignet ist. Zum Schutz der Wicklung gegen Überhitzung werden heute meist thermische Sensoren, z.B. PTC-Sensoren, in den Maschinensträngen eingebaut.

Für höhere Temperaturanstiegsraten sind diese PTC-Sensoren jedoch nicht geeignet. Unter anderem aufgrund einer eigenen thermischen Trägheit wird ein Abschaltsignal verzögert, was eine Überhitzung der Maschine zur Folge hat. Dies kann zu einer Schädigung der Wicklung sowie zu einem Ausfall der Maschine führen.

Der Erfindung liegt die Aufgabe zugrunde, eine dynamoelektrische Maschine dahingehend zu verbessern.

Die Lösung der Aufgabe gelingt durch Anspruch 1, d.h. ein Verfahren zur Überwachung einer Wicklungstemperatur einer Wicklung einer elektrischen Maschine (2),
wobei die elektrische Maschine (2) von einem Umrichter (1) gespeist wird,
wobei eine in die Wicklung eingeprägte Heizleistung ermittelt wird,
wobei die Heizleistung mittels eines thermischen Modells ausgewertet wird,
wobei bei Überschreiten eines mit der Heizleistung verknüpften kritischen Wicklungstemperaturwerts ein Warnsignal und/oder ein Abschaltsignal erzeugt wird.

Die Erfindung eignet sich besonders gut für dynamoelektrische Maschinen. Jedoch ist die Erfindung auch bei Transformatoren anwendbar.

Das thermische Modell ist vorzugsweise ein $I^2t$-Modell.

Das thermische Modell ist vorzugsweise ein thermisches Maschinenmodell.

Der Wicklungstemperaturwert wird vorzugsweise aus der Heizleistung ermittelt.

Die Maschine arbeitet vorzugsweise im Motorbetrieb.

Bei Auftreten des Abschaltsignals ist die elektrische Maschine vorzugsweise sofort oder wenigstens zeitnah abzuschalten bzw. wird abgeschaltet.

Ein Warnsignal kann bei einer niedrigeren Temperaturschwelle, insbesondere vor dem Abschaltsignal, ausgelöst werden. Dies bietet die Möglichkeit, dass ein Bearbeitungszyklus, z.B. in einer Werkzeugmaschine, definiert vor einem Abschalten beendet werden kann.

In einer vorteilhaften Ausführung wird die in die Wicklung eingeprägte Heizleistung umrichterseitig ermittelt.

In einer vorteilhaften Ausführung wird die in die Wicklung eingeprägte Heizleistung während eines Zeitabschnitts gemessen und daraus eine mittlere Heizleistung ermittelt.

Dies gelingt vorteilhaft wenigstens im Wesentlichen in Echtzeit.

In einer vorteilhaften Ausführung wird die in die Wicklung eingeprägte Heizleistung im laufenden Umrichterbetrieb ermittelt.

Die Erfindung bietet den Vorteil einer sensorlosen Überwachung bzw. Messung der Wicklungstemperatur im laufenden Umrichterbetrieb einer elektrischen Maschine, insbesondere eines permanantmagneterregten Synchronmotors, wodurch eine Überhitzung sowie ein Ausfall der Maschine verhindert werden.

Die Überwachung der mittleren Wicklungstemperatur basiert vorteilhaft auf einer umrichterseitigen Messung der in die Wicklung eingeprägten Heizleistung, die in einem thermischen Modell, insbesondere $I^2t$-Modell, ausgewertet wird.

Im thermischen Modell wird vorteilhaft aus gemessenen physikalischen Werten die Wicklungstemperatur bestimmt.

Bei Überschreiten des mit der Heizleistung verknüpften kritischen Wicklungstemperaturwerts wird ein Warnsignal und/oder ein Abschaltsignal generiert.

Beispielsweise beträgt für eine Auslegung nach Isolation der Wärmeklasse F die maximal zulässige Wicklungstemperatur 140°C (Mittelwert innerhalb der Wicklung) bzw. 155°C (Spitzenwert innerhalb der Wicklung).

Vorteilhaft wird die eingeprägte mittlere Heizleistung in einem Zeitabschnitt $\Delta t$ bei einer zu ermittelnden (also bisher unbekannten) Wicklungstemperatur im Umrichter ermittelt. Es gilt:

$$P_{Cu,x} = U_x \cdot I_x - P_{mech,x}$$

Für

$$n_x = 0 \text{ gilt: } P_{Cu,x} = U_x \cdot I_x$$

Ferner gilt:

$$P_{mech,0} \approx k_T(I_x) \cdot I_{qx} \cdot n_x \cdot 2\pi/60$$

$P_{Cu,x}$ ist hierbei die mittlere Heizleistung bei einer unbekannten Temperatur x.
$U_x$ und $I_x$ sind eine Motorspannung und ein Motorstrom.
$P_{mech,x}$ ist die mechanische Leistung.
$n_x$ ist die Drehzahl.
$k_T(I_x)$ ist eine stromabhängige Drehmomentkonstante des Motors.
$I_{qx}$ ist eine drehmomentbildende Stromkomponente.
In einer vorteilhaften Ausführung wird die mittlere Heizleistung mit einer definierten und/oder vorher, insbesondere bei einer bekannten Wicklungstemperatur, ermittelten Heizleistung verglichen.
Die mittlere Heizleistung wird vorteilhaft gemessen.
Die bekannte Wicklungstemperatur wird vorteilhaft durch eine Referenzmessung bestimmt.
Als Referenzmessung eignet sich besonders gut eine Wicklungstemperatur bei $T_{Cu}$ = 20 °C.
Es gilt:

$$P_{Cu,20°C} = U_0 \cdot I_0 - P_{mech,0}$$

Es gilt vorzugsweise n = 0 und somit $P_{Cu,20°C} = U_0 \cdot I_0$
In einer vorteilhaften Ausführung wird durch eine relative Änderung der ermittelten Heizleistung eine Änderung eines Wicklungswiderstands bestimmt.
Vorteilhaft wird durch eine relative Änderung der ermittelten Heizleistung zur Referenzmessung eine Änderung eines Wicklungswiderstand bestimmt.
Inklusive einer Skalierung mit Strömen, falls $I_x \neq I_0$, gilt:

$$P_{Cu,x} = I_x^2 \cdot R_x$$

$$P_{Cu,20°C} = I_0^2 \cdot R_{20°C}$$

Für den Wicklungswiderstand gilt:

$$R_x = R_{20°C} \cdot (P_{Cu,x} / P_{Cu,20°C}) \cdot (I_0 / I_x)^2$$

Vorteilhaft wird zudem ein Widerstand der Zuleitungen bzw. die dort anfallende Heizleistung bei der Ermittlung der Motorheizleistung berücksichtigt.
In einer vorteilhaften Ausführung wird jeder Maschinenstrang einzeln überwacht.
In einer vorteilhaften Ausführung wird auf Basis eines Kommutierungswinkels eine Strangheizleistung ermittelt.
Es kann zudem die ermittelte Heizleistung in die Ermittlung einfließen.
Dies gelingt vorteilhaft dadurch, dass für wenigstens einen, vorzugsweise jeden, Kommutierungswinkel eine genaue Verteilung der gesamten gemessenen Heizleistung auf die drei Motorstränge berechnet wird und somit jeder Strang separat thermisch überwacht werden kann (z.B. im Stillstand).
Die beschriebenen Formeln umfassen Effektivwerte, insbesondere $P_{Cu,x}$, $U_x$, $I_x$, was z.B. im Stillstand den DC-Messwerten entspricht bzw. beim Drehfeld sich auf eine Periode bezieht (Effektivwert sinusförmiger Größen).
Im Allgemeinen gilt vorzugsweise für die mittlere Heizleistung $P_{Cu,x}$, die in einem beliebigen Zeitintervall $\Delta t$ = t2-t1 gemessen wird:

$$P_{Cu,x,mitt} = (1/\Delta t) \cdot \int_{\Delta t} \{ [u_x(t) \cdot i_x(t)]\, dt - p_{mech,x}(t)\, dt \}$$

Die Erfindung ermöglicht eine sensorlose Überwachung der mittleren Wicklungstemperatur im laufenden Umrichterbetrieb.
Die Überwachung ist für jeden Strang einzeln möglich.

Die Erfindung gelingt ferner durch Anspruch 9, d.h. eine Vorrichtung zur Durchführung eines derartigen Verfahrens.

Die Erfindung gelingt ferner durch Anspruch 10, d.h. einen Antrieb, aufweisend eine dynamoelektrische Maschine, einen Umrichter und eine Vorrichtung.

Die Überwachung gelingt sensorlos. Dies reduziert einen Einbauaufwand von Bauteilen sowie Kosten dafür.

Ferner ist ein Kosten- und Zuverlässigkeitsvorteil für Kunden gegeben, da die fehleranfälligen Sensoren, Leitungen und sonstige Anschlusstechnik nicht benötigt werden.

Die Erfindung eignet sich besonders gut für permanenterregte Synchronmaschinen, z.B. mit Wasserkühlung. Hierzu zählen unter anderem Linear- und Torque-Motoren. Sie werden als Einbaumotoren, z.B. in Direktantrieben für Werkzeugmaschinen, für hochdynamische Beschleunigungen eingesetzt.

Die Erfindung ist von Vorteil, da sehr hohe Beschleunigungen ermöglicht werden. Dies ist unter anderem mit sehr hohen Maximalströmen bzw. einer hohen $I_{max}$-Steigerung verbunden. Die Erfindung ermöglicht hierbei eine gute Handhabung eines Temperaturanstiegs von z.B. 45 K/s bis 70 K/s.

Die Erfindung bietet den Vorteil, dass eine energieeffiziente und zudem verbesserte thermische Motorausnutzung, die für alle Betriebszustände optimierbar ist, vorliegt.

Ferner gibt es keine Probleme bzgl. einer sicheren elektrischen Trennung, da keine Sensoren dicht an der Wicklung verbaut werden müssen. Zudem müssen keine Sicherheitsreserven eingeplant werden.

Im Folgenden wird die Erfindung anhand der in den Figuren gezeigten Ausführungsbeispiele näher beschrieben und erläutert. Es zeigen:

FIG 1 einen möglichen Ablauf des erfindungsgemäßen Verfahrens,
FIG 2 einen Antrieb,
FIG 3 einen Vergleich zweier Verläufe der Wicklungstemperatur,
FIG 4 FIG 5 und FIG 6 Verläufe aus einem beispielhaften Lastzyklus.

FIG 1 zeigt einen möglichen Ablauf des erfindungsgemäßen Verfahrens.

Das Verfahren zur Überwachung einer Wicklungstemperatur einer Wicklung einer elektrischen Maschine, wobei die elektrische Maschine von einem Umrichter gespeist wird, umfasst die folgenden Verfahrensschritte:
In einem Verfahrensschritt S1 wird eine in die Wicklung eingeprägte Heizleistung ermittelt.

In einem Verfahrensschritt S2 wird die Heizleistung mittels eines thermischen Modells ausgewertet.

In einem Verfahrensschritt S3 wird bei Überschreiten eines mit der Heizleistung verknüpften kritischen Wicklungstemperaturwerts ein Warnsignal und/oder ein Abschaltsignal erzeugt.

FIG 2 zeigt einen Antrieb 4. Der Antrieb 4 weist eine elektrische Maschine 2 sowie einen Umrichter 1 auf. Der Umrichter umfasst eine Vorrichtung zur Durchführung des oben beschriebenen Verfahrens.

Die Vorrichtung kann Hardware, z. B. Messtechnik zur Erfassung von Betriebsgrößen, aufweisen. Die Vorrichtung kann zudem ein Berechnungsmodell aufweisen.

Der Umrichter 1 ist mit einem Netz 100, aufweisend L1, L2, L3 und PE, verbunden.

Eine Erfassung von Betriebsgrößen, insbesondere aktuellen Betriebsgrößen wie Strömen, Spannungen, Drehmoment und Drehzahl, ist durch einen Block 103 dargestellt. Die Betriebsgrößen werden in einem thermischen Modell 104 verarbeitet. Ein Block 105 dient einer Initialisier-Prozedur, bei welcher vorteilhaft eine Referenzmessung durchgeführt wird.

Eine Ermittlung der Wicklungstemperatur, insbesondere strangbezogen, erfolgt in einem Block 106.

Ein thermischer Motorschutz 102 erzeugt vorzugsweise das Warn- bzw. Abschaltsignal.

Über eine Leitung 101 sind Umrichter 1 und Maschine 2 verbunden. Die Figur zeigt die Ströme $i_U$ (t), $i_V$ (t) und $i_W$ (t). Dies sind vorteilhaft Betriebsströme im laufenden Betrieb. Ferner zeigt die Figur die Leitungswiderstände $R_{L,U}$, $R_{L,V}$ und $R_{L,W}$.

Im Modell 104 werden zudem Leitungsdaten berücksichtigt. Dies ist durch Block 107 und durch Block 108 dargestellt.

Block 107 gibt vorteilhaft Aufschluss über eine Umgebungstemperatur $T_0$.

Block 108 gibt vorteilhaft Aufschluss, insbesondere bei Umgebungstemperatur, über Leitungsdaten wie den Leitungswiderstand, einen Leitungsquerschnitt sowie eine Leitungslänge.

Die Maschine 2 umfasst in der Figur drei Stränge U, V und W.

Im Modell 104 werden zudem Maschinendaten berücksichtigt. Dies ist durch Block 109 dargestellt.

Block 109 gibt vorteilhaft Aufschluss über Wicklungswiderstände $R_U$, $R_V$ und $R_W$, Wicklungsquerschnitte, Gewicht und Ströme.

FIG 3 zeigt einen Vergleich zwischen einem mittels des Verfahrens ermittelten Verlauf 20 der Wicklungstemperatur mit einem mittels einer e-Funktion ermittelten Verlauf 21.

Der Verlauf 21 zeigt eine Nachbildung der Wicklungstemperatur $T_{Cu}(t)$ im Verlauf der Zeit t mit nur einer

Zeitkonstante $\tau_e$ der e-Funktion. Dies stellt ein thermisches Motormodell mit nur einer thermischen Kapazität, ein sogenanntes Ein-Massen-Modell, dar. Der Verlauf 21 zeigt eine starke Abweichung vom ermittelten Echtzeit-Verlauf 20 während eines Erhitzungsvorgangs.

Die Figur zeigt ferner eine Tangente 10 für $\tau_{mess}$ sowie eine Tangente 11 für $\tau_e$. Die Tangenten zeigen die starke Abweichung zwischen den Anfangssteigungen der beiden Verläufe.

Es wird deutlich, dass bei Verfahren, die den Verlauf 21 zur Folge haben, große Sicherheitsreserven erforderlich sind, was zu einer schlechten Motorausnutzung führt.

Das erfindungsgemäße Verfahren, welches auf einer EchtzeitMessung der Wicklungstemperatur mittels einer Messung der Heizleistung vorzugsweise im laufenden Umrichterbetrieb basiert, ermöglicht eine sehr gute Motorausnutzung.

In den FIG 4, FIG 5 und FIG 6 sind Verläufe aus einem beispielhaften Lastzyklus des Motorbetriebs dargestellt. Die Figuren zeigen einen Stromverlauf, gemessene Heizleistungen (für drei Stränge und ein Summenwert) und der daraus ermittelte Verlauf der Wicklungstemperatur (für drei Stränge).

FIG 4 zeigt einen beispielhaften Verlauf 200 eines Stroms $I_{rms}$ der Stränge U, V, W in Abhängigkeit der Zeit t. FIG 5 zeigt einen beispielhaften Verlauf 202 der Heizleistung $P_{Cu}$ der Stränge U, V, W in Abhängigkeit der Zeit t. FIG 5 zeigt ferner einen Verlauf 201 einer Gesamtheizleistung $P_{Cu}$. FIG 6 zeigt beispielhafte Verläufe 203 (Strang U), 204 (Strang V) und 205 (Strang W) der Wicklungstemperatur $T_{Cu}$ in Abhängigkeit der Zeit t. Zudem ist ein Verlauf einer Kühlwassertemperatur 206 dargestellt.

## Patentansprüche

**1.** Verfahren zur Überwachung einer Wicklungstemperatur einer Wicklung einer elektrischen Maschine (2),
wobei die elektrische Maschine (2) von einem Umrichter (1) gespeist wird,
wobei eine in die Wicklung eingeprägte Heizleistung ermittelt wird,
wobei die Heizleistung mittels eines thermischen Modells (104) ausgewertet wird,
wobei bei Überschreiten eines mit der Heizleistung verknüpften kritischen Wicklungstemperaturwerts ein Warnsignal und/oder ein Abschaltsignal erzeugt wird.

**2.** Verfahren nach Anspruch 1, wobei die in die Wicklung eingeprägte Heizleistung umrichterseitig ermittelt wird.

**3.** Verfahren nach einem der vorhergehenden Ansprüche, wobei die in die Wicklung eingeprägte Heizleistung während eines Zeitabschnitts gemessen wird und daraus eine mittlere Heizleistung ermittelt wird.

**4.** Verfahren nach einem der vorhergehenden Ansprüche, wobei die in die Wicklung eingeprägte Heizleistung im laufenden Umrichterbetrieb ermittelt wird.

**5.** Verfahren nach einem der vorhergehenden Ansprüche, wobei die mittlere Heizleistung mit einer definierten und/oder vorher, insbesondere bei einer bekannten Wicklungstemperatur ermittelten, Heizleistung verglichen wird.

**6.** Verfahren nach einem der vorhergehenden Ansprüche, wobei durch eine relative Änderung der ermittelten Heizleistung eine Änderung eines Wicklungswiderstand bestimmt wird.

**7.** Verfahren nach einem der vorhergehenden Ansprüche, wobei jeder Maschinenstrang einzeln überwacht wird.

**8.** Verfahren nach einem der vorhergehenden Ansprüche, wobei auf Basis eines Kommutierungswinkels eine Strangheizleistung ermittelt wird.

**9.** Vorrichtung zur Durchführung eines Verfahrens nach einem der Ansprüche 1 bis 8.

**10.** Antrieb (4), aufweisend eine dynamoelektrische Maschine (2), einen Umrichter (1) und eine Vorrichtung nach Anspruch 9.

FIG 1

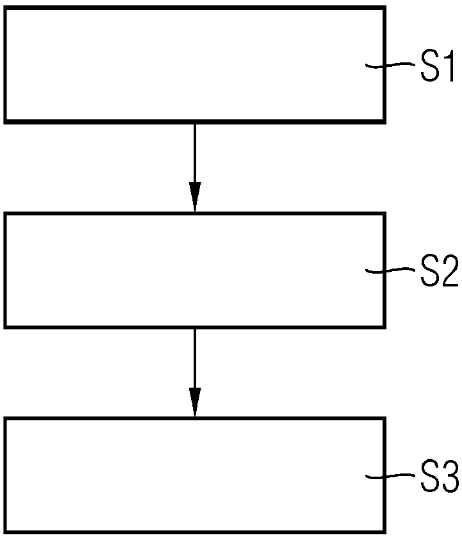

FIG 2

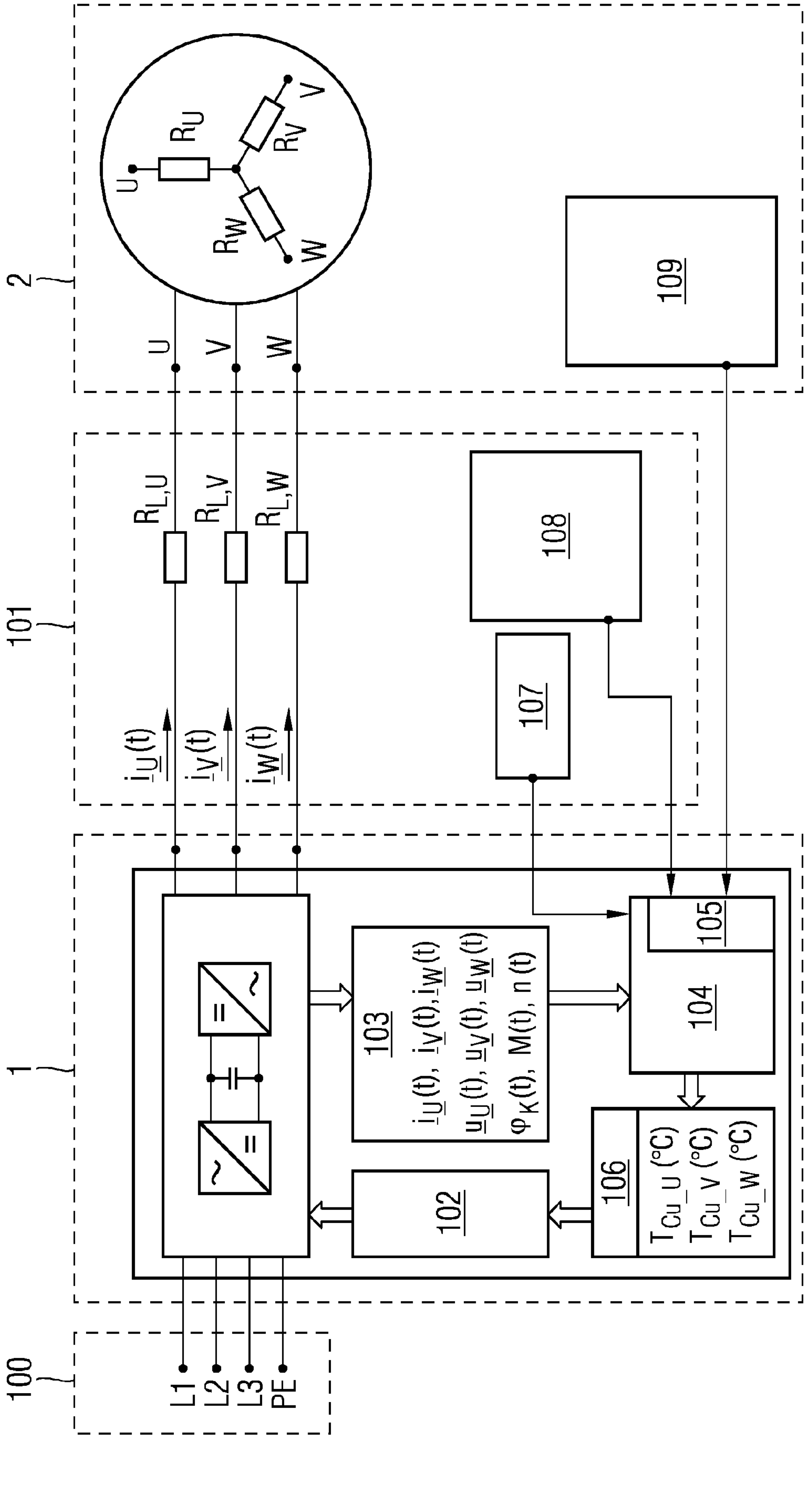

100
L1
L2
L3
PE
1
101
2
4
102
103
$i_U(t)$, $i_V(t)$, $i_W(t)$
$u_U(t)$, $u_V(t)$, $u_W(t)$
$\varphi_K(t)$, $M(t)$, $n(t)$
104
105
106
$T_{Cu_U}$ (°C)
$T_{Cu_V}$ (°C)
$T_{Cu_W}$ (°C)
107
108
109
$i_U(t)$
$i_V(t)$
$i_W(t)$
$R_{L,U}$
$R_{L,V}$
$R_{L,W}$
U
V
W
$R_U$
$R_V$
$R_W$

FIG 3

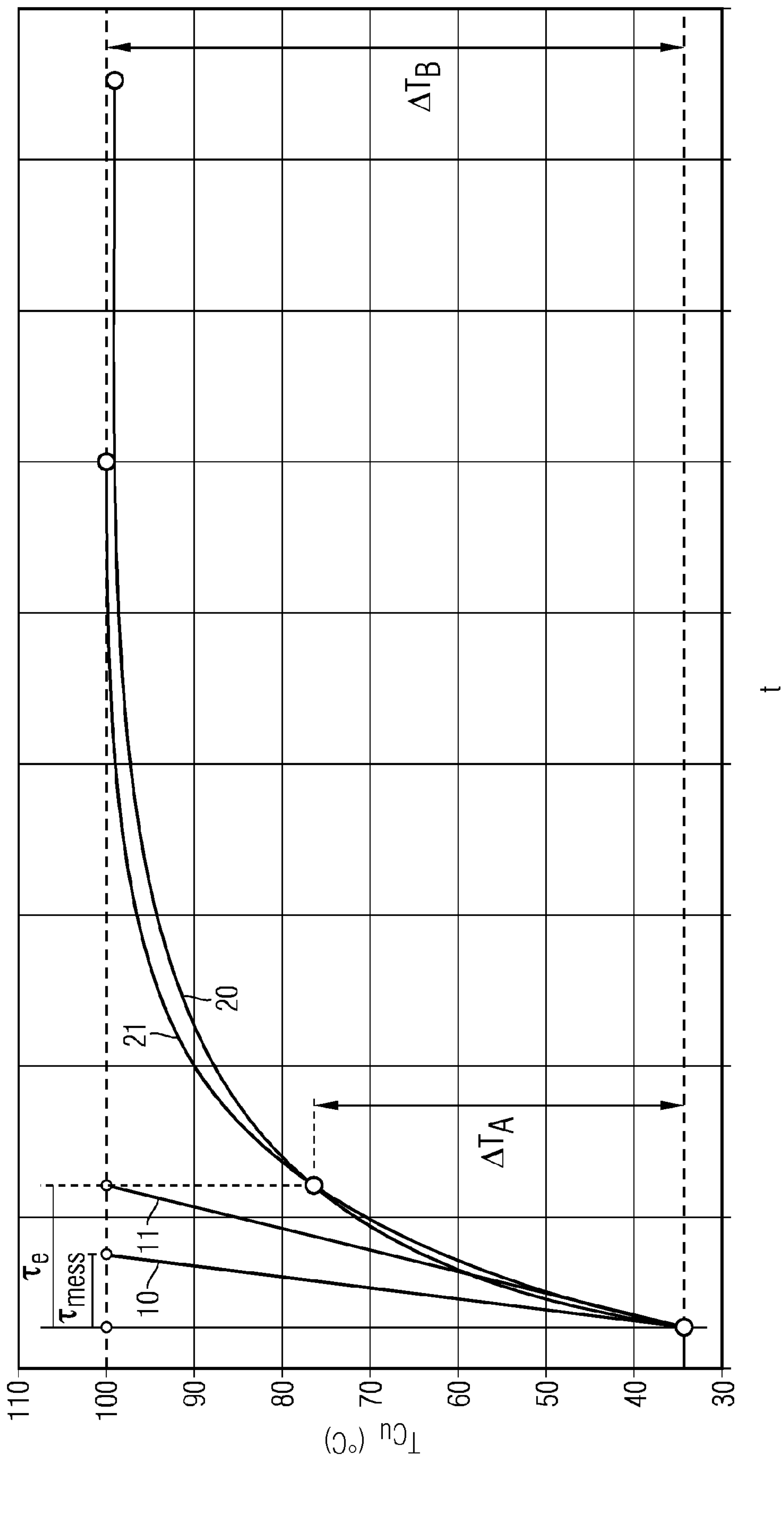

110
100
90
80
70
60
50
40
30
$T_{Cu}$ (°C)
t
$\tau_e$
$\tau_{mess}$
10
11
20
21
$\Delta T_A$
$\Delta T_B$

FIG 4

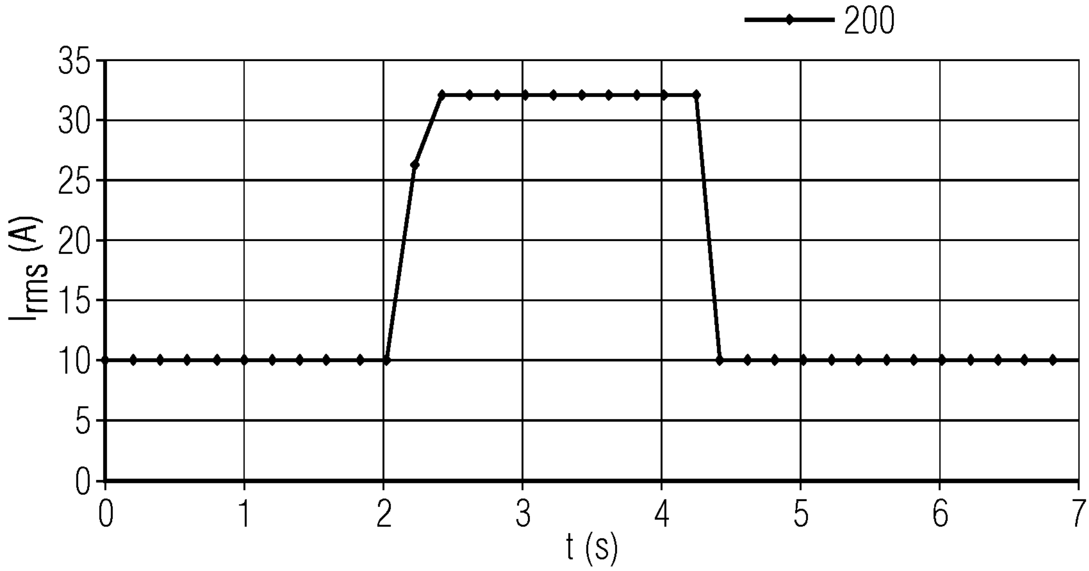
200
35
30
25
20
15
10
5
0
$I_{rms}$ (A)
0
1
2
3
4
5
6
7
t (s)

FIG 5

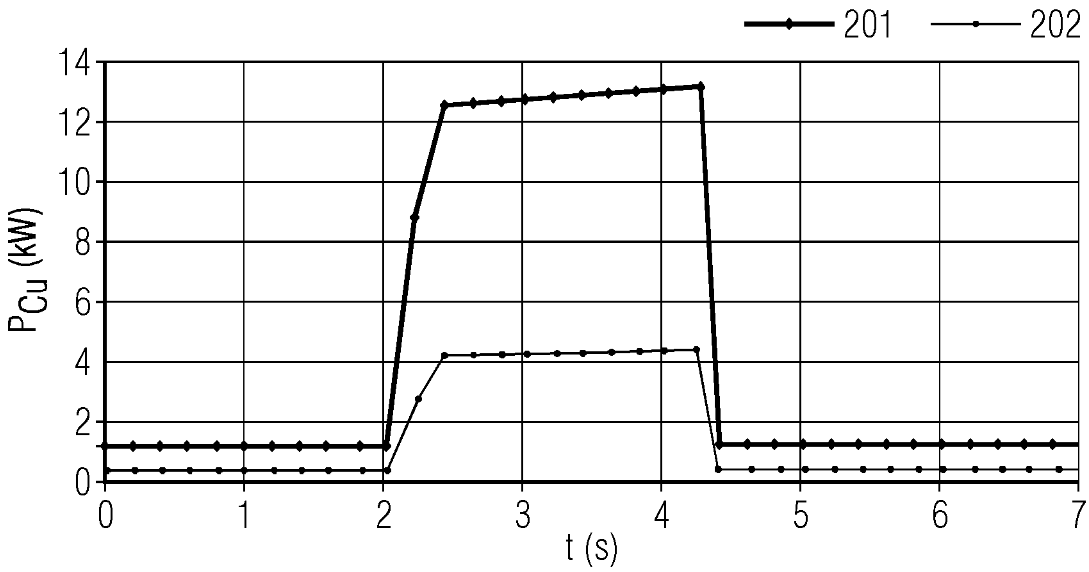
201
202
14
12
10
8
6
4
2
0
$P_{Cu}$ (kW)
0
1
2
3
4
5
6
7
t (s)

FIG 6

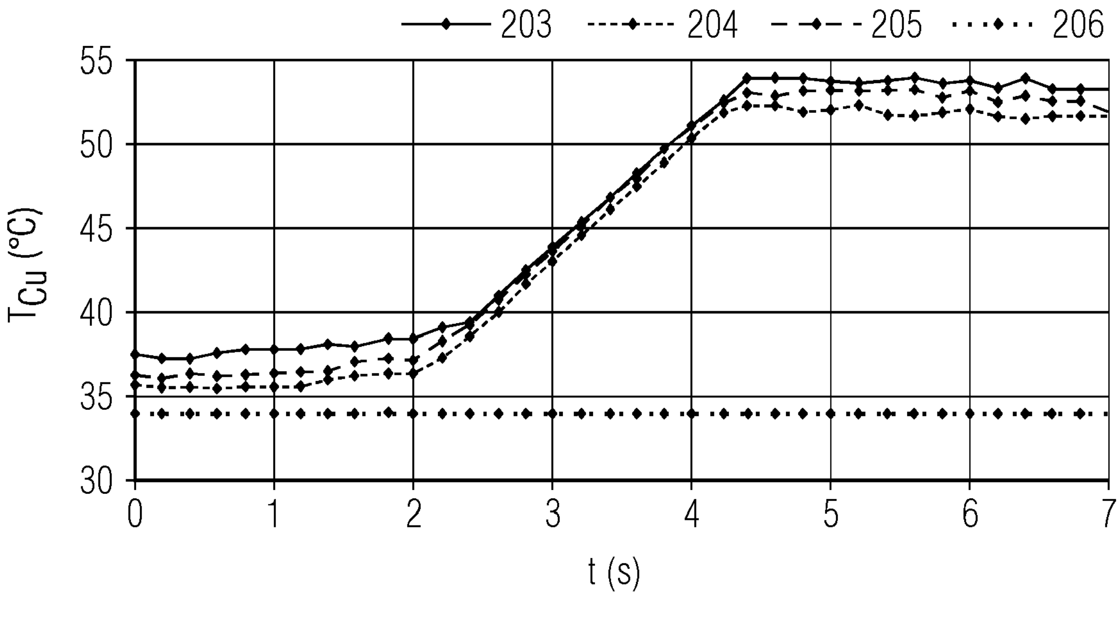

Europäisches Patentamt
European Patent Office
Office européen des brevets

# EUROPÄISCHER RECHERCHENBERICHT

Nummer der Anmeldung
EP 20 19 3637

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 025078 A1 (CONTINENTAL TEVES AG & CO OHG [DE]) 11. Februar 2010 (2010-02-11) * Zusammenfassung; Abbildung 1 * * Absätze [0013] - [0018], [0032] - [0057] * | 1-10 | INV. H02H6/00 H02H7/085 H02P29/64 G01K7/42 |
| X | US 6 434 505 B1 (KOEPKE MICHAEL [DE] ET AL) 13. August 2002 (2002-08-13) * Zusammenfassung; Abbildung 1 * * Spalte 2, Zeile 2 - Spalte 5, Zeile 27 * | 1-10 | |
| X | DE 10 2006 027174 A1 (HONEYWELL INT INC [US]) 25. Januar 2007 (2007-01-25) * Zusammenfassung; Abbildungen 4,5 * * Absätze [0006], [0007], [0089], [0029], [0033] - [0041] * | 1-10 | |
| X | CN 102 566 434 A (FANSHIDE AUTOMOBILE TECHNOLOGY SHANGHAI CO LTD) 11. Juli 2012 (2012-07-11) * Absätze [0013] - [0032] * | 1-10 | RECHERCHIERTE SACHGEBIETE (IPC) |
| X | CN 85 102 463 A (HE SHOUZHENG [CN]) 4. Februar 1987 (1987-02-04) * das ganze Dokument * | 1-10 | H02H H02P G01W G01K |

Der vorliegende Recherchenbericht wurde für alle Patentansprüche erstellt

1

| Recherchenort | Abschlußdatum der Recherche | Prüfer |
|---|---|---|
| München | 11. Februar 2021 | Palukova, Mila |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 20 19 3637

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2021

| Im Recherchenbericht angeführtes Patentdokument | Datum der Veröffentlichung | Mitglied(er) der Patentfamilie | Datum der Veröffentlichung |
|---|---|---|---|
| DE 102009025078 A1 | 11-02-2010 | KEINE | |
| US 6434505 B1 | 13-08-2002 | KEINE | |
| DE 102006027174 A1 | 25-01-2007 | DE 102006027174 A1<br>US 2007153433 A1 | 25-01-2007<br>05-07-2007 |
| CN 102566434 A | 11-07-2012 | KEINE | |
| CN 85102463 A | 04-02-1987 | KEINE | |

EPO FORM P0461

Für nähere Einzelheiten zu diesem Anhang : siehe Amtsblatt des Europäischen Patentamts, Nr.12/82